# NEUE EUROPÄISCHE PATENTSCHRIFT

(11) **EP 2 831 447 B2**
(45) Veröffentlichungstag und Bekanntmachung des Hinweises auf die Entscheidung über den Einspruch: **15.03.2023**
(45) Hinweis auf die Patenterteilung: 01.11.2017
(21) Anmeldenummer: 13711391.6
(22) Anmeldetag: 22.03.2013
(51) Int. Cl.: F16D 55/226, F16D 66/02

(54) **SCHIEBESATTEL-SCHEIBENBREMSE EINES KRAFTFAHRZEUGS**
FLOATING-CALIPER DISK BRAKE OF A MOTOR VEHICLE
FREIN À DISQUE À ÉTRIER COULISSANT D'UN VÉHICULE À MOTEUR

(30) Priorität: 26.03.2012 DE 102012006105
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: ASEN, Alexander, 94428 Eichendorf (DE); FRICKE, Jens, 94474 Vilshofen (DE); IRASCHKO, Johann, 85301 Schweitenkirchen (DE); PESCHEL, Michael, 82296 Schöngeising (DE); STOEGER, Christian, 94474 Vilshofen (DE)
(74) Vertreter: Specht, Peter
(86) Internationale Anmeldenummer: PCT/EP2013/056024
(87) Internationale Veröffentlichungsnummer: WO 2013/143992

(56) Entgegenhaltungen:
- EP-A1- 0 978 665
- EP-A2- 0 381 947
- DE-A1- 3 707 821
- DE-A1-102005 022 597
- GB-A- 2 458 789

## Beschreibung

Die vorliegende Erfindung betrifft eine Schiebesattel Scheibenbremse eines Kraftfahrzeugs, insbesondere eines Nutzfahrzeugs gemäß dem Oberbegriff des Anspruchs 1, wie z.B. aus DE A 10 2005 O22 597, DE 37 07 821 A1 und EP 0 978 665 B1 bekannt. Zur Erfassung des Verschleißes von Bremsbelägen, genauer des Reibbelags von Bremsbelägen, die an einer Belagträgerplatte des Bremsbelags befestigt sind, sind im Wesentlichen zwei Varianten aus dem Stand der Technik bekannt.

Bei einer ersten Variante wird über die Verschleißsensierung lediglich die Verschleißgrenze der Bremsbeläge erkannt. Dabei werden elektrische Kontakte, beispielsweise in Form von Drahtschleifen im Reibmaterial oder am Belagträger des Bremsbelags eingesetzt, die bei Erreichen der Verschleißgrenze mechanisch abgerieben werden und somit ein elektrisches Signal an einer Auswerteeinheit der Fahrzeugelektrik weiter geben. Nach dem Erreichen der Verschleißgrenze muss ein solcher Verschleißsensor ausgetauscht werden.

Zur kontinuierlichen Verschleißerkennung von Reibbelägen müssten bei dieser Art von Verschleißsensierung mehrere solcher Leiterschleifen in den Reibbelag des Bremsbelags eingesetzt werden, was allerdings nur im begrenzten Umfang möglich ist.

Die kontinuierliche Belagverschleißerkennung erfolgt gemäß einer weiteren Variante über die Position der Nachstellung des Schiebesattels und zwar als Summe des Belag- und Scheibenverschleißes. Dabei kann über einen möglicherweise ungleichmäßigen Verschleiß des zuspannseitigen Bremsbelags gegenüber dem rückseitigen Bremsbelag keine Aussage getroffen werden. Um hier ein unzulässiges Verschleißmaß der Bremsbeläge auszuschließen, muss ein solcher möglicher Ungleichverschleiß zwischen dem zuspannseitigen und dem rückseitigen Bremsbelag bei dem an die Auswerteeinheit abgegebenen Verschleißsignal berücksichtigt werden. Nachteilig an dieser Vorgehensweise ist, dass sich dadurch die maximal nutzbare Reibbelagmasse vermindert.

Aufgabe der vorliegenden Erfindung ist es, eine Schiebesattel-Scheibenbremse eines Kraftfahrzeugs bereit zu stellen, welches zum einen eine kontinuierliche Verschleißsensierung ermöglicht und zum zweiten keine Erneuerung der Verschleißsensoren beim Belagwechsel erfordert.

Diese Aufgabe wird durch eine Schiebesattel-Scheibenbremse eines Kraftfahrzeugs mit den Merkmalen des Anspruchs 1 gelöst.

Vorteilhafte Ausführungsvarianten der Erfindung sind Gegenstand der Unteransprüche.

Gemäß einer weiteren vorteilhaften Ausführungsvariante ist der Verschleißsensor als Drehsensor ausgebildet, wobei zwischen dem ersten Sensorbauteil und dem zweiten Sensorbauteil eine Welle mit auf der Mantelfläche angeordnetem Steilgewinde vorgesehen ist, die mit einem entsprechenden Steilgewinde an der Innenseite des ringförmig ausgebildeten zweiten Sensorbauteils im Eingriff steht, sodass eine Verschiebung des Bremssattels einer Rotation der Welle um einen Winkel α bewirkt, die eine Änderung des von dem Verschleißsensor an die Auswerteschaltung abgegebenen Signals hervorruft. Durch die Erfassung der Drehbewegung der Welle kann beispielsweise über ein Drehpotentiometer ein Signal ausgegeben werden, dass wiederum der Verschiebung des Bremssattels gegenüber dem feststehenden Lagerholm des Führungslagers bestimmt werden.

In einer vorteilhaften Ausgestaltung weist die Scheibenbremse einen weiteren, die Summe aus Bremsbelag und Bremsscheibenverschleiß ermittelten Verschleißsensor auf, der mit der Auswerteschaltung verbunden ist, wobei die von den verschiedenen Verschleißsensoren ermittelten Verschleißsignale in der Auswerteschaltung aufaddiert oder verglichen werden. So kann beispielsweise durch Vergleich der beiden Signale, beispielsweise in Gestalt von Spannungssignalen, ein sogenanntes "Worst-Case"-Signal an die Auswerteeinheit des Kraftfahrzeugs übergeben werden, wobei das "Worst-Case"-Signal der größeren der beiden Spannungen der von den beiden Sensoren abgegebenen Spannungssignale entspricht.

Nachfolgend werden Ausführungsbeispiele anhand der beiliegenden Zeichnungen näher erläutert.

Es zeigen:
- Figuren 1a und 1b: eine erste nicht-erfindungsgemäße Ausführungsvariante einer Scheibenbremse in teilweise geschnittener Darstellung mit unverschlissenen bzw. verschlissenen Bremsbelägen;
- Figur 2: eine Detailansicht der in Figur 1 gezeigten Ausführungsvariante der Scheibenbremse;
- Figur 3: eine alternative Ausführungsvariante eines in der Scheibenbremse eingesetzten Verschleißsensor in Gestalt eines Drehsensors und
- Figur 4: eine perspektivische Darstellung des Verschleißsensors aus Figur 3.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Scheibenbremse, Bremssattel, Verschleißsensor und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

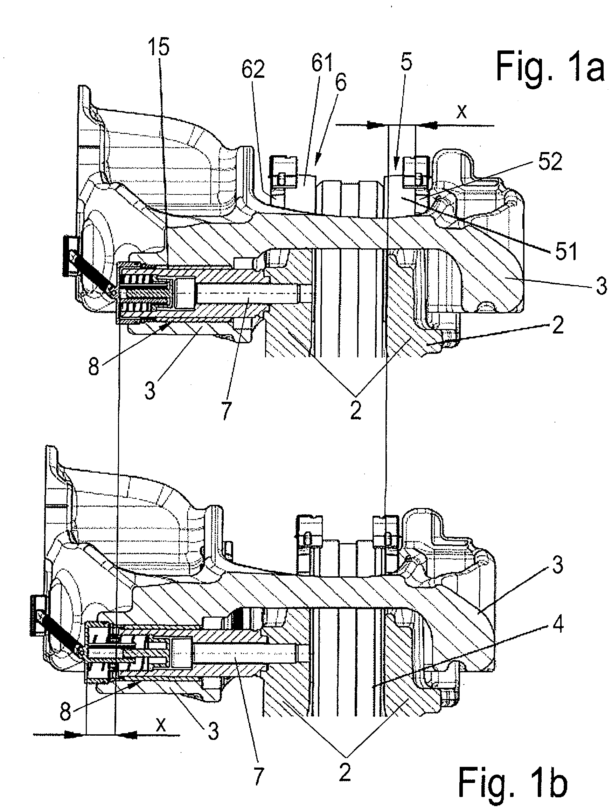

In der Figur 1 ist in einer teilweise geschnittenen Frontansicht eine Schiebesattel-Scheibenbremse gezeigt, mit einer Bremsscheibe 4 und einem einen Teil der Bremsscheibe 4 umgreifenden ortsfesten Bremsträger 2. Auf der Zuspannseite (in Figur 1 links) der Bremsscheibe 4 ist ein die Bremsscheibe 4 und den Bremsträger 2 überspannender Bremssattel 3 auf einem Führungslager 8 verschiebbar gelagert, auf dem der Bremssattel 3 je nach Verschleißzustand der Reibbeläge 51, 61 von zuspannseitig und rückseitig der Bremsscheibe 4 angeordneten Bremsbelägen 5, 6 axial zur Drehachse der Bremsscheibe 4 verschiebbar.

Figur 1a zeigt dabei die Position des verschiebbaren Bremssattels 3 bei eingesetzten unverschlissenen Bremsbelägen 5, 6. Figur 1b zeigt die Position des Bremssattels, um eine Distanz x verschoben, bei verschlissenen Bremsbelägen 5, 6. Gut zu erkennen ist hier, dass die Distanz x, um die der Bremssattel 3 verschoben wurde, dem Belag- und Bremsscheibenverschleiß auf der Rückseite der Bremsscheibe 4 entspricht.

Das Führungslager 8 besteht im Wesentlichen aus einem Lagerholm 82, der über eine Schraube 7 am Bremsträger festgeschraubt ist und einer den Lagerholm umgreifenden Lagerhülse 81, die bremsscheibenseitig beispielsweise mit einer Ringmanschette am Lagerholm 82 abgedichtet ist, die sich zusammen mit dem Bremssattel 3 beim Verschieben des Bremssattels 3 auf Grund eines Verschleißes der Bremsbeläge 5, 6 auf dem feststehenden Lagerholm 82 verschiebt.

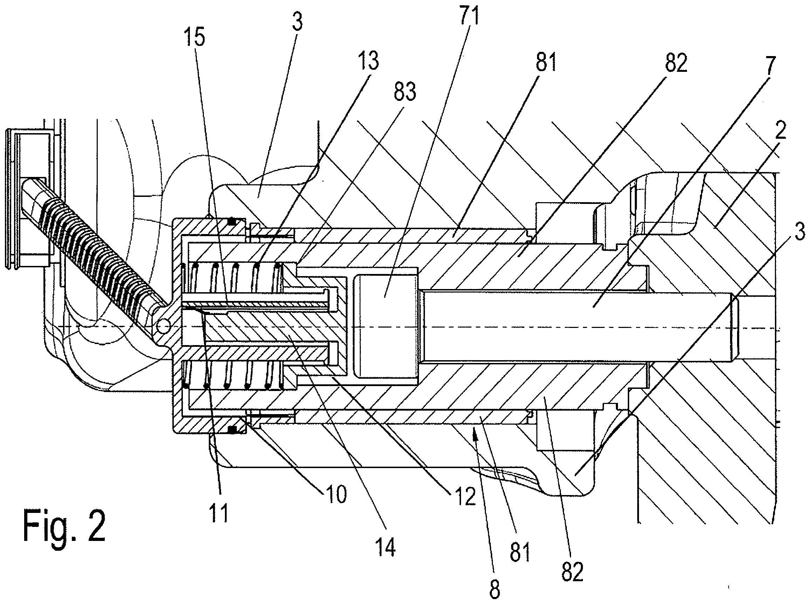

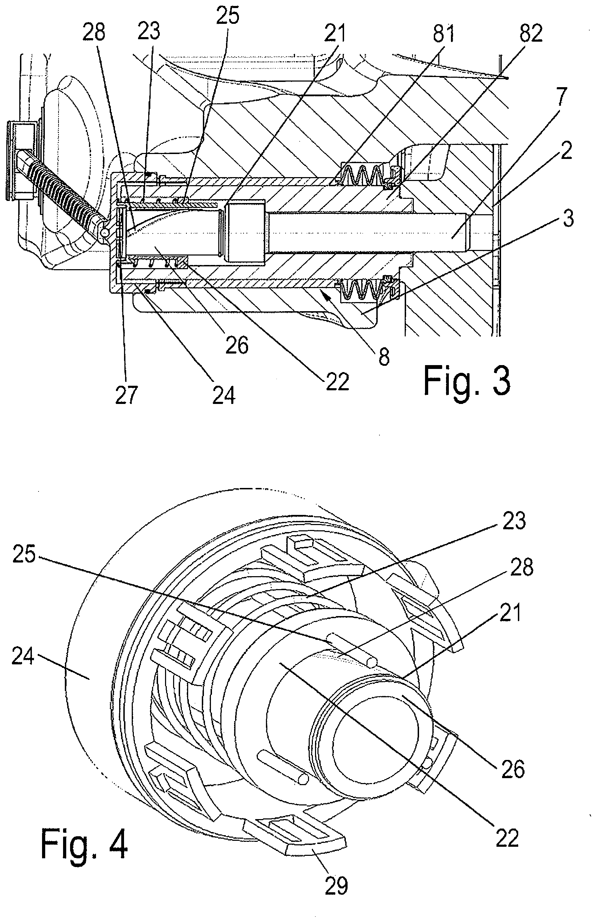

Der Schraubenkopf 71 der Schraube 7, mit dem der Lagerholm 82 am Bremsträger 2 angeschraubt ist, sitzt dabei tief in einer Bohrung des Lagerholms 82. In dieser Bohrung am von der Bremsscheibe 4 abgewandten Ende des Lagerholms 82 ist ein Verschleißsensor eingesetzt, mit im wesentlichen zwei Sensorbauteilen, wobei, wie in den Figuren 2 und 3 zu erkennen ist, ein erstes Sensorbauteil 10, 24 am Bremssattel 3 befestigt ist, das in Verbindung mit einem am Führungslager 8 anliegenden zweiten Sensorbauteil 12, 22 steht, wobei der Verschleißsensor selbst mit einer Auswerteschaltung verbunden ist, an die die Signale des Verschleißsensors und zur Berechnung der optimalen Bremssattelstellung weitergeben werden.

Das erste Sensorbauteil 10, 24 ist dabei, wie in den Figuren 2, 3, welche unterschiedliche Ausführungsvarianten des Verschleißsensors zeigen, gezeigt, als Sensorgehäuse, ausgebildet, das bevorzugt in eine das Führungslager 8 aufnehmende Öffnung verschließende Lagerkappe integriert ist oder auch als die Öffnung des Führungslagers 8 verschließende Lagerkappe selbst ausgebildet ist.

Das zweite Sensorbauteil 12, 22 ist hier als federbelastet an das Führungslager 8 angedrücktes Tastelement ausgebildet, wobei die Federbelastung des zweiten Sensorbauteils vorzugsweise durch eine Druckfeder 13 erfolgt. Das Tastelement 12, 22 wird dabei bevorzugt an eine Kontur 83 des Lagerholms 82 des Führungslagers 8 angedrückt, wodurch bewirkt wird, dass das Tastelement wie auch der Führungsholm 82 stets in seiner Position verharrt und nicht mit dem Bremssattel 3 bzw. dem ersten Sensorbauteil 10, 26 mitbewegt wird. Dadurch kann die aus der Verschiebung des Bremssattels 3 resultierende Relativbewegung durch eine Relativbewegung des ersten Sensorbauteils, hier des Sensorgehäuses zu dem zweiten Sensorbauteil 12, 22, hier dem Tastelement, über ein Messsystem 11 erfasst werden, das hier beispielhaft in Gestalt eines Schleifers eines Potentiometer dargestellt ist.

Bei der in Figur 2 dargestellten Ausführungsvariante der Scheibenbremse ist der Verschleißsensor als Linear-Sensor ausgebildet, wobei der am Tastelement 12 befestigte Schleifer 11 einen Steg des Sensorgehäuses berührt, wobei aus der Berührposition die Verschiebung des Sensorgehäuses 10 gegenüber dem Tastelement 12 herleitbar ist. Wie oben erwähnt, entspricht die Verschiebung des Sensorgehäuses 10 gegenüber dem Tastelement 12 der Verschiebung des Bremssattels 3 und damit dem rückseitigen Bremsbelag- und Bremsscheibenverschleiß.

Bei der Ausführungsvariante der Scheibenbremse gemäß Figur 3 ist an Stelle des Linear-Sensors ein Drehsensor in den Hohlraum des Lagerholms 82 vor der Schraube 7, bzw. dem Schraubenkopf 71 eingesetzt.

Auch bei diesem als Drehsensor ausgebildeten Verschleißsensor ist das erste Sensorbauteil 24 als Sensorgehäuse ausgebildet und das zweite Sensorbauteil 22 als Tastelement. An dem Sensorgehäuse 24 ist eine Welle 26 drehbar um eine Achse parallel zur Drehachse der Bremsscheibe angeordnet, die sich durch das bevorzugt als Ringscheibe ausgebildete Tastelement 22 hindurch erstreckt.

Auf der Mantelfläche der Welle 26 ist ein Steilgewinde 28 vorgesehen, dass mit einem entsprechenden Steilgewinde an der Innenseite des ringförmig ausgebildeten zweiten Sensorbauteils 22 im Eingriff steht, so dass eine Verschiebung des Bremssattels 3 einer Rotation der Welle 26 um einen Winkel α berührt, die eine Änderung des von dem Verschleißsensor an die Auswertungsschaltung abgegebenen Signals hervorruft. Auch hier kann das signalerzeugende Messeinheit 27 als Potentiometer ausgebildet sein, wobei die Winkelposition der Welle 26 hier das der Position des Bremssattels entsprechende Signal bewirkt.

Der Steigungswinkel des Steilgewindes der Welle 26 richtet sich dabei nach dem zu erwartenden Reibungskoeffizienten und darf dabei nicht im Bereich der Selbsthemmung liegen, so dass hier gelten muss, dass der Arctan des Reibungskoeffizienten sehr viel kleiner ist als der Steigungswinkel des Steilgewindes. Der Steigungswinkel entspricht dabei vorzugsweise weniger als eine Umdrehung der Welle über den gesamten Verschiebebereich des Bremssattels 3.

Figur 4 zeigt noch einmal den als Drehsensor ausgebildeten Verschleißsensor in einer perspektivischen Darstellung. Gut zu erkennen ist hier, dass das als zweites Sensorelement 22 ausgebildete Tastelement durch am Sensorgehäuse erfindungsgemäß befestigte Führungsstifte 25 drehfest festgelegt ist. Die Druckfeder 23 drückt das zweite Sensorelement 22 dabei entsprechend der in Figur 2 gezeigten Ausführungsvariante stets gegen die Kontur 83 des Lagerholms 82 des Führungslagers 8.

Zur Auswertung der Signale der Verschleißsensoren können die herkömmlichen Schnittstellen zum Kraftfahrzeug beibehalten werden. Der von den Verschleißsensoren gegebene Messwert wird dabei vorzugsweise auf eine zentrale Platine geleitet und dort vorzugsweise mit einem zusätzlich vorhandenen Summenverschleißsensor verrechnet, wobei dieser Summenverschleißsensor den Gesamtverschleiß beider Bremsbeläge 5, 6 zuspannseitig und rückseitig der Bremsscheibe 4 und den Verschleiß der Bremsscheibe erkennt. So können beispielsweise die Messwerte der beiden Verschleißsensoren aufaddiert und als Summenwert über eine vorhandene Analogschnittstelle an eine Auswerteeinheit des Kraftfahrzeugs übergeben werden. Dabei sind die Signale der Verschleißsensoren so beschaffen, dass sie jeweils den halben Spannungswert ausgeben.

In einer alternative Auswerteschaltung, bei der beide Sensoren im gleichen Spannungsbereich arbeiten, werden die Signale der beiden Verschleißsensoren verglichen und der größere der beiden Spannungen an die Auswerteeinheit des Kraftfahrzeugs übergeben.

### Bezugszeichenliste

- 2: Bremsträger
- 3: Bremssattel
- 4: Bremsscheibe
- 5: Bremsbelag
- 6: Bremsbelag
- 7: Schraube
- 8: Führungslager
- 10: Sensorbauteil
- 11: Schleifer
- 12: Sensorbauteil
- 13: Druckfeder
- 22: Sensorbauteil
- 23: Druckfeder
- 24: Sensorbauteil
- 25: Führungsstifte
- 26: Welle
- 27: Messeinheit
- 28: Steilgewinde
- 51: Reibbelag
- 52: Belagträgerplatte
- 61: Reibbelag
- 62: Belagträgerplatte
- 71: Schraubenkopf
- 82: Lagerholm
- 83: Kontur

## Patentansprüche

1. Schiebesattel-Scheibenbremse eines Kraftfahrzeugs, insbesondere eines Nutzfahrzeugs, aufweisend
- einen eine Bremsscheibe (4) übergreifenden und relativ zu einem ortsfesten Bremsträger (2) und axial zur Bremsscheibe (4) auf einem Führungslager (8) verschiebbar gelagerten Bremssattel (3),
- mindestens zwei Bremsbeläge (5, 6) mit einer Belagträgerplatte (52, 62) und einem daran befestigten Reibbelag (51, 61), wobei jeweils mindestens ein Bremsbelag (6) zuspannseitig und mindestens ein Bremsbelag (5) rückseitig der Bremsscheibe (4) angeordnet ist,
- eine Einrichtung zur Erfassung eines Bremsbelagverschleißes mit einem den Verschiebeweg (x) des Bremssattels erfassenden Verschleißsensor,
- wobei ein als Sensorgehäuse ausgebildetes erstes Sensorbauteil (10, 24) am Bremssattel (3) befestigt ist, das in Verbindung mit einem an dem Führungslager (8) anliegenden zweiten Sensorbauteil (12, 22) steht,
- wobei der Verschleißsensor mit einer Auswerteschaltung verbunden und in einer das Führungslager (8) aufnehmenden Öffnung des Bremssattel (3) angeordnet ist,
- wobei das erste Sensorbauteil (10, 24) als eine das Führungslager (8) aufnehmende Öffnung verschließende Lagerkappe ausgebildet ist;
wobei das zweite Sensorbauteil (12, 22) als federbelastet an das Führungstaqer(8) angedrücktes Tastelement ausgebildet ist;
wobei das als Tastelement ausgebildete zweite Sensorbauteil (12, 22) an eine Kontur (83) eines Lagerholms (82) des Führungslagers (8) oder eine Kontur der Schraube (7) angedrückt ist;
**dadurch gekennzeichnet, dass**
das als zweites Sensorelement (22) ausgebildete Tastelement durch am Sensorgehäuse befestigte Führungsstifte (25) drehfest festgelegt ist.

2. Scheibenbremse nach Anspruch 1, **dadurch gekennzeichnet, dass** der Verschleißsensor als Linearsensor ausgebildet ist, wobei das erste Sensorbauteil (10) gegenüber dem zweiten Sensorbauteil (12) linear verschiebbar ist.

3. Scheibenbremse nach Anspruch 1, **dadurch gekennzeichnet, dass** der Verschleißsensor als Drehsensor ausgebildet ist, wobei zwischen dem ersten Sensorbauteil (24) und dem zweiten Sensorbauteil (22) eine Welle (26) mit auf der Mantelfläche angeordnetem Steilgewinde (28) vorgesehen ist, die mit einem entsprechenden Steilgewinde an der Innenseite des ringförmig ausgebildeten zweiten Sensorbauteils (22) im Eingriff steht, so dass eine Verschiebung des Bremssattel (3) eine Rotation der Welle (26) um einen Winkel α bewirkt, die eine Änderung des von dem Verschleißsensor an die Auswerteschaltung abgegebenen Signals hervorruft.

4. Scheibenbremse nach einem der vorstehenden Ansprüche, **dadurch gekennzeichnet, dass** die Scheibenbremse einen weiteren, die Summe aus Bremsbelag- und Bremsscheibenverschleiß ermittelnden Verschleißsensor aufweist, der mit der Auswerteschaltung verbunden ist, wobei die von den Verschleißsensoren ermittelten Verschleißsignale in der Auswerteschaltung aufaddiert oder verglichen werden.

## Claims

1. Sliding calliper disc brake of a motor vehicle, in particular a commercial vehicle, having
- a brake calliper (3), which overlaps a brake disc (4) and is displaceably mounted relative to a stationary adapter (2) and axially to the brake disc (4) on a guide bearing (8),
- at least two brake pads (5, 6) with a backing plate (52, 62) and a friction lining (51, 61) attached thereto, wherein in each case at least one brake pad (6) is located on the application side and at least one brake pad (5) is located on the rear side of the brake disc (4),
- a device for detecting a brake pad wear with a wear sensor detecting the displacement distance (x) of the brake calliper,
- wherein a first sensor component (10, 24) designed as sensor housing is attached to the brake calliper (3) and connected to a second sensor component (12, 22) in contact with the guide bearing (8),
- wherein the wear sensor is connected to an evaluation circuit and located in an opening of the brake calliper (3) which accommodates the guide bearing (8),
- wherein the first sensor component (10, 24) is designed as a bearing cap closing the opening accommodating the guide bearing (8),
wherein the second sensor component (12, 22) is designed as a touch element pressed under spring load against the guide bearing (8);
wherein the second sensor component (12, 22) designed as a touch element is pressed against a contour (83) of a bearing bar (82) of the guide bearing (8) or a contour of the screw (7);
**characterised in that**
the touch element designed as second sensor component (22) is non-rotatably fixed by guide pins (25) fastened to the sensor housing.

2. Disc brake according to claim 1, **characterised in that** the wear sensor is designed as a linear sensor, wherein the first sensor component (10) is capable of linear displacement against the second sensor component (12).

3. Disc brake according to claim 1, **characterised in that** the wear sensor is designed as a rotary sensor, wherein between the first sensor component (24) and the second sensor component (22) there is provided a shaft (26) with a high-helix thread on the outer surface, which shaft is in engagement with a corresponding high-helix thread on the inside of the annular second sensor component (22), so that a displacement of the brake calliper (3) causes a rotation of the shaft (26) about an angle α, which rotation induces a change of the signal emitted by the wear sensor to the evaluation circuit.

4. Disc brake according to any of the preceding claims, **characterised in that** the disc brake has a further wear sensor which detects the sum of brake pad and brake disc wear and is connected to the evaluation circuit, wherein the wear signals determined by the wear sensors are added or compared in the evaluation circuit.

## Revendications

1. Frein à disque à étrier coulissant d'un véhicule automobile, notamment d'un véhicule utilitaire, comportant
- un étrier (3) de frein enjambant un disque (4) de frein et monté coulissant par rapport à un flasque (2) de frein fixe en position et axialement par rapport au disque (4) de frein sur un palier (8) de guidage,
- au moins deux garnitures (5, 6) de frein ayant une plaque (52, 62) de porte-garniture et une garniture (51, 61) de friction qui y est fixée, au moins une garniture (6) de frein étant disposée du côté du serrage et au moins une garniture (5) de frein du côté arrière du disque (4) de frein,
- un dispositif de détection de l'usure d'une garniture de frein ayant un capteur d'usure détectant le trajet (x) de déplacement de l'étrier de frein,
- dans lequel il est fixé à l'étrier (3) de frein une première pièce (10, 24) de capteur, qui est constituée en boîtier du capteur et qui est en liaison avec une deuxième pièce (12, 22) de capteur s'appliquant au palier (8) de guidage,
- dans lequel le capteur d'usure est relié à un circuit d'exploitation et est disposé dans une ouverture, recevant le palier (8) de guidage, de l'étrier (3) de frein,
- la première pièce (10, 24) du capteur est constituée sous la forme d'une coiffe de palier fermant l'ouverture recevant le palier (8) de guidage,
dans lequel la deuxième pièce (12, 22) du capteur est constituée sous la forme d'un élément palpeur soumis à l'action d'un ressort et appliqué au palier (8) de guidage, dans lequel la deuxième pièce (12, 22) du capteur, constituée en élément palpeur, est appliquée à un contour (83) d'un longeron (82) du palier (8) de guidage ou à un contour de la vis (7);
**caractérisé en ce que**
l'élément palpeur constitué en deuxième élément (22) de capteur est solidaire en rotation de broches (25) de guidage fixées au boîtier du capteur.

2. Frein à disque suivant la revendication 1, **caractérisé en ce que** le capteur d'usure est constitué sous la forme d'un capteur linéaire, la première pièce (10) du capteur pouvant coulisser linéairement par rapport à la deuxième pièce (12).

3. Frein à disque suivant la revendication 1, **caractérisé en ce que** le capteur d'usure est constitué sous la forme d'un capteur de rotation dans lequel il est prévu, entre la première pièce (24) du capteur et la deuxième pièce (22) du capteur, un arbre (26) ayant un filetage (28) à pas rapide, qui est disposé sur la surface latérale et qui engrène avec un filetage à pas rapide correspondant sur le côté intérieur de la deuxième pièce (22) du capteur constituée annulairement, de manière à ce qu'un déplacement de l'étrier (3) de frein provoque une rotation de l'arbre (26) d'un angle α, qui provoque une modification du signal émis par le capteur d'usure vers le circuit d'exploitation.

4. Frein à disque suivant l'une des revendications précédentes, **caractérisé en ce que** le frein à disque a un autre capteur d'usure déterminant la somme de l'usure de la garniture de frein et du disque de frein et relié au circuit d'exploitation, les signaux d'usure déterminés par les capteurs d'usure étant additionnés dans le circuit d'exploitation ou y étant comparés.
